# EUROPEAN PATENT APPLICATION

(11) **EP 1 956 702 A2**
(43) Date of publication of application: **13.08.2008**
(21) Application number: 08001359.2
(22) Date of filing: 24.01.2008
(51) Int. Cl.: H02M 3/24

(54) **Power supply apparatus**

(30) Priority: 12.02.2007 TW 96202677 U
(71) Applicant: Portwell Inc., Neihu Taipei City 114 (TW)
(72) Inventor: Chi, Pei-Chin, Neihu District, 114 Taipei City (TW)
(74) Representative: Volpert, Marcus

(57) **Abstract**

The present invention discloses a power supply apparatus which is an apparatus installed in an electronic system, and the apparatus includes a DC power input transformer (10) connected with a DC voltage adapter (20) through an electric extension cord (11), such that DC power of different voltage values is rectified into a single voltage value through the DC power input transformer (10) and transmitted to the DC voltage adapter (20) through an electric extension cord (11), and divided into different voltage outputs by the adapter for supplying different voltages to electronic equipments. The invention not only installs the transformer and the adapter at appropriate spaces depending on the spaces of the electronic system, but also supplies DC power with different voltages to different electronic equipments.

## Description

### BACKGROUND OF THE INVENTION

### Field of the Invention

The present invention relates to a power supply apparatus, and more particularly to a power supply apparatus that installs a transformer and an adapter of a DC voltage through an electronic device for rectifying different external input DC voltages into a single voltage and outputting different voltages for the output as needed.

### Description of the Related Art

Since science and technologies advance rapidly, and electronic technology is well developed, electronic products have become an indispensable part of our daily life, and electronic products are manufactured with a short, small, light and thin design and diversified functions, and the short, small, light and thin structure of the electronic product must come with densely installed electronic components before the space occupied by the components can be reduced.

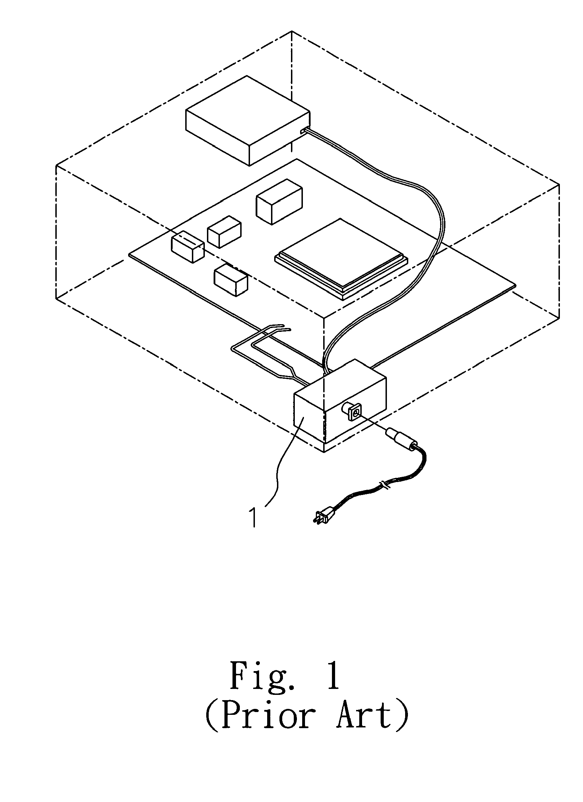

In a general desktop computer system, a power supply apparatus is installed at a rear panel of a casing as shown in FIG 1, and the power supply apparatus 1 is covered by a metal casing, wherein the casing contains an AC transformer and a DC voltage adapter, and the transformer is provided for converting utility electricity (AC power) into a DC power, and the DC voltage adapter is provided for converting the DC power converted by the transformer into DC power of different voltage values to match and supply the required power for different electronic equipments (such as a motherboard, a disk drive, and an interface card, etc) in the computer system. However, this type of power supply apparatus integrates the transformer with the adapter in the casing, and such arrangement not only occupies much space, but also makes it difficult for assemblers or maintenance personnel to reach the electronic equipments. Even worse, the power source can supply AC power only. Therefore, transportation means such as motor vehicles and ships cannot obtain the required power and need to install an additional transformer, which makes the application very inconvenient.

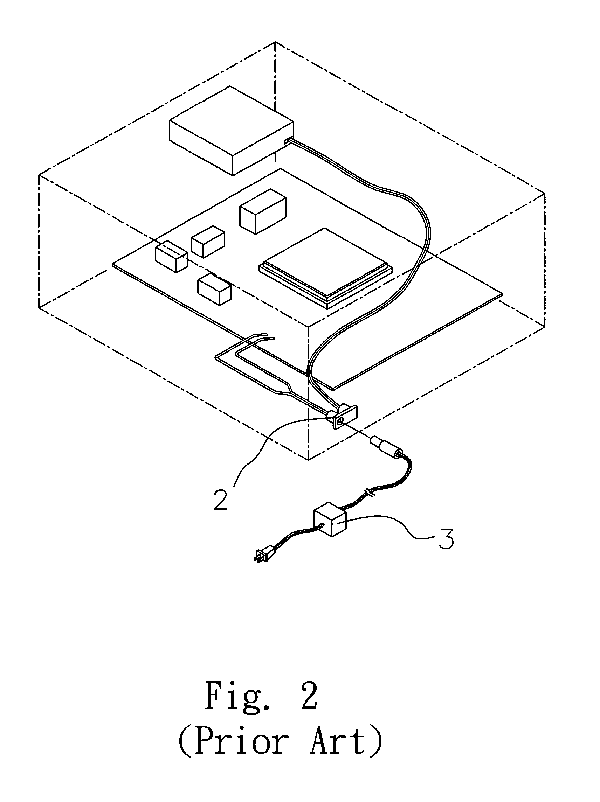

Referring to FIG. 2 for another prior art power supply apparatus, a DC voltage divider 2 is installed in the electronic system and connected to different electronic equipments in the electronic system through electric circuits, and the voltage divider 2 includes an AC power transformer 3 for converting utility electricity into DC power of a single voltage value. Although such arrangement can reduce the space occupied by the power supply apparatus in the electronic system, different DC voltage values are required for the applications at motor vehicles, ships or different places where only a DC voltage is supplied, and the DC voltage values provided by those places are different, and thus manufacturers have to manufacture products that can satisfy the specification of different input DC voltages, and a higher production cost is incurred.

### Summary of the Invention

In view of the foregoing shortcomings of the prior art, the inventor of the present invention based on years of experience in the related industry to conduct extensive researches and experiments, and finally developed a power supply apparatus in accordance with the present invention to overcome the foregoing shortcomings of the prior art.

The primary objective of the present invention is to provide a power supply apparatus which is applied in an electronic system. The power supply apparatus is installed in a casing, and the power supply apparatus comprises a DC power input transformer connected with a DC voltage adapter through an electric extension cord, such that DC power of different voltages can be rectified into a single voltage value through the DC transformer, transmitted to the DC voltage adapter through the electric extension cord, and divided into different voltages through the adapter for supplying the required power to electronic devices and related equipments (such as a motherboard, a disk drive and an interface card, etc). The invention not only installs the transformer and the adapter in appropriate spaces depending on the space of the electronic device, but also supplies DC power of different voltages for different equipments, and thus its application is convenient and simple.

Another objective of the present invention is to provide a power supply apparatus, wherein the input power of the DC power input transformer can be 6, 7, 8, 9, 10~24, 48 or greater than 24 volts.

A further objective of the present invention is to provide a power supply apparatus, wherein the output power of the DC voltage adapter complies with the ATX or ATX12V specification.

To make it easier for our examiner to understand the objective, shape, structure, apparatus, characteristics and performance of the present invention, the following detailed description with reference to the accompanying drawing of preferred embodiments is given for example, but such preferred embodiments are not intended to limit the scope of the present invention.

### BRIEF DESCRIPTION OF THE DRAWINGS

FIG. 1 is a schematic view of a prior art apparatus;
FIG. 2 is a schematic view of a prior art apparatus;
FIG. 3 is a schematic view of a circuit of a preferred embodiment of the present invention; and
FIG. 4 is a perspective view of a preferred embodiment of the present invention.

### DETAILED DESCRIPTION OF THE PREFERRED EMBODIMENTS

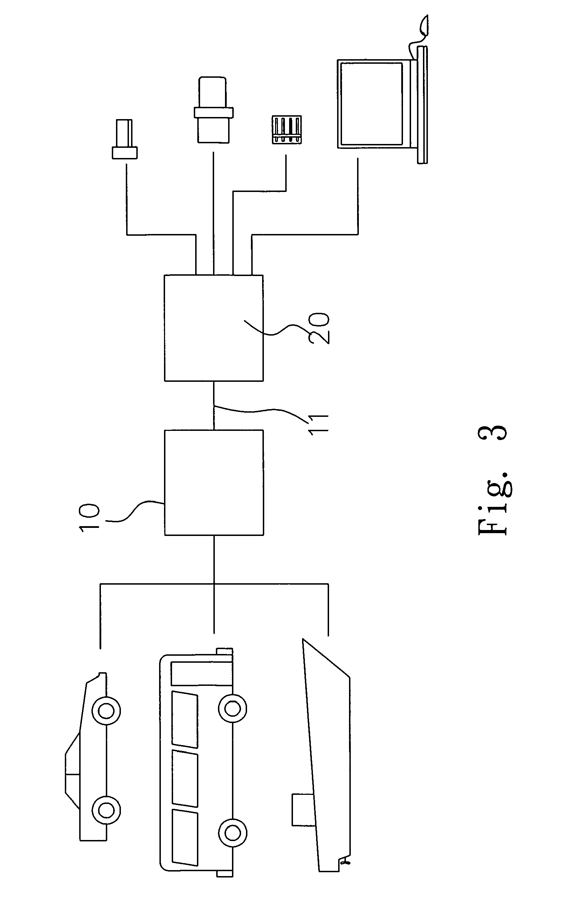

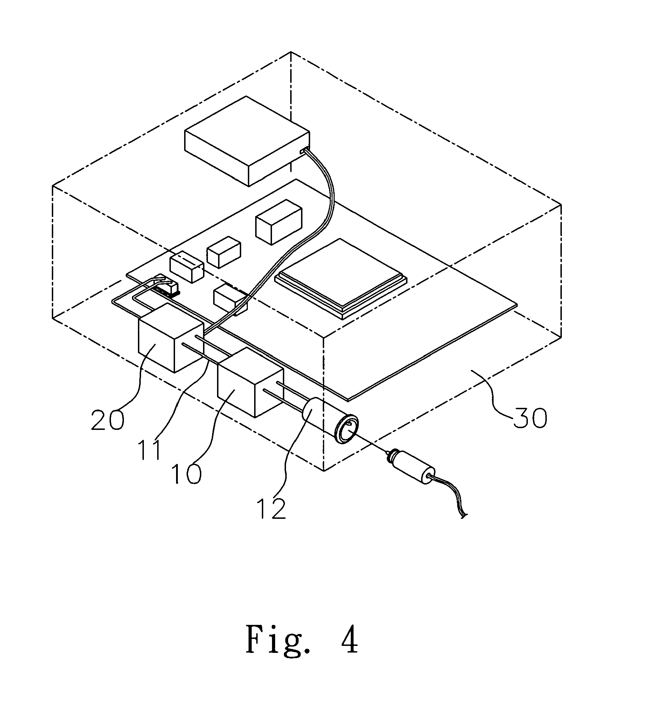

Referring to FIGS. 3 and 4 for a power supply apparatus of the present invention, the power supply apparatus is installed at an electronic system which is a computer system in this embodiment, and the power supply apparatus comprises a DC power input transformer 10 for converting DC power of different voltage values into a single voltage, wherein the DC power of different voltages can be used for transportation means such as motor vehicles, buses and ships, and the DC voltage of a single input is equal to 6, 7, 8, 9, 10~24, 48 volts or greater than 24 volts in this embodiment.

Further, the DC power is inputted into the transformer 10 and connected with a DC voltage adapter 20 by an electric extension cord 11, and the DC voltage adapter 20 can rectify the inputted DC power of a single voltage value into different divided voltages (such as +3.3V, +5, and +12 volts) in conformity with the ATX or ATX12V specification for supplying the required power to different electronic equipments (such as a motherboard, a disk drive and an interface card) in the electronic system, and the DC voltage adapter 20 can be installed at a position proximate to the electronic equipment as needed.

The power supply apparatus of the invention is installed in a casing 30, and the DC power input transformer 10 and the DC voltage adapter 20 can be installed at appropriate positions, or integrated as a whole or separated from each other, so that the DC power of different voltages can be inputted through a plug 12, rectified by the DC power input transformer 10 into a single voltage, transmitted to the DC voltage adapter 20 through the electric extension cord 11, and divided into different voltages through the DC voltage adapter 20 proximate to the equipments for supplying the required power to electronic devices and related equipments of different voltages. The invention not only installs the DC power input transformer 10 and the DC voltage adapter 20 in appropriate spaces depending on the space of the electronic device, but also supplies DC power of different voltages for different equipments.

From the disclosure of the aforementioned preferred embodiments, the present invention can improve the spatial design to overcome the shortcomings of the prior art and provide a special function. In summation of the description above, the structure, characteristics and embodiments of the present invention are fully disclosed to show that the objectives and performance of the invention comply with the requirements of patent application, and thus the invention is duly applied for patent application.

The description and its accompanied drawings are used for describing a preferred embodiment of the present invention, and it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A DC power supply apparatus, installed in an electronic system, and said DC power supply apparatus comprising a DC power input transformer coupled with a DC voltage adapter by an electric extension cord, such that a DC power of a different external voltage is rectified into an output of a single voltage value through said DC power input transformer, and transmitted to said DC voltage adapter through said electric extension cord, and divided into different voltage outputs through said adapter, for supplying different voltages to related electronic components in said electronic system.

2. The power supply apparatus according to claim 1, wherein said electronic device is a computer system.

3. The power supply apparatus according to claim 1, wherein said external DC voltage is equal to 6, 7, 8, 9, 10-24 or 48 volts.

4. The power supply apparatus according to claim 1, wherein said external DC voltage is greater than 24 volts.

5. The power supply apparatus according to claim 1, wherein said DC power input transformer has an output voltage in compliance with an ATX or ATX12V specification.

6. The power supply apparatus according to claim 1, wherein said DC power input transformer and said DC voltage adapter are integrated as a whole.

7. The power supply apparatus according to claim 1, wherein said DC power input transformer and said DC voltage adapter can be installed separately at different locations of said electronic system.

8. The power supply apparatus according to claim 1, wherein said DC power input transformer is connected to a plug.
